# EUROPEAN PATENT APPLICATION

(11) **EP 4 246 747 A1**
(43) Date of publication of application: **20.09.2023**
(21) Application number: 21902487.4
(22) Date of filing: 02.12.2021
(51) Int. Cl.: H02H 3/16

(54) **METHOD FOR PROCESSING SINGLE-PHASE GROUNDING OF NON-EFFECTIVELY GROUNDED SYSTEM**

(30) Priority: 12.12.2020 CN 202011453630
(71) Applicant: Baoding Yuxin Electric Technology Co., Ltd., Baoding, Hebei 071000 (CN)
(72) Inventor: XUE, Zhanyu, Baoding, Hebei 071000 (CN); DING, Tongtong, Baoding, Hebei 071000 (CN); LIU, Jianwei, Baoding, Hebei 071000 (CN)
(74) Representative: MERH-IP Matias Erny Reichl Hoffmann Patentanwälte PartG mbB
(86) International application number: PCT/CN2021/135184
(87) International publication number: WO 2022/121780

(57) **Abstract**

A method for processing single-phase grounding of a non-effectively grounded system. The method comprises: after single-phase grounding occurs, cyclically connecting and disconnecting a non-faulted phase or a neutral point and the ground to form a closed loop together with a grounded phase, and repeatedly generating a current pulse; using controlled switches (1, 2, 3, 4, 5) to detect the current pulse, and setting the number of current pulses that are triggered to be cut off by the controlled switches (4, 5) downstream of a power source direction to be less than the number of current pulses triggered to be cut off by the controlled switches (1, 2, 3) upstream of the power source direction; and after a certain one of the controlled switches (1, 2, 3, 4, 5) meets a trigger condition and is cut off, stopping the grounding of the non-faulted phase. By means of the method, a single-phase grounded fault point interval can be quickly positioned, and a fault can be removed automatically, quickly and accurately, such that the processing quality of a single-phase grounding fault can be better improved, and the power supply safety is improved.

## Description

### TECHNICAL FIELD

The present disclosure relates to the field of electric power system fault processing, in particular to a method for processing a single-phase ground fault of a non-effectively grounded system.

### BACKGROUND

When single-phase grounding occurs in the non-effectively grounded system (such as a three-phase power supply system), the single-phase grounding is generally processed according to the following steps: 1) searching for a faulted line; 2), stopping the faulted line; 3) searching for and eliminating a fault point; and 4) restoring power supply. The processing method often has some disadvantages such as slow fault point finding, long power outage time and large power outage area. Moreover, the single-phase grounding lasts for a long time before troubleshooting, which is dangerous to the outside. In order to solve this problem, the utility model patent CN202815149U provides an asymmetric current source. By using the asymmetric current source, a non-fault phase can be grounded to form a short circuit with the grounded phase to generate a short-circuit current, and then the fault point can be quickly indicated by displaying the circuit in which the short-circuit current is located through a current detector. However, it is found in use that the grounding resistance is difficult to predict during single-phase grounding, the short-circuit current is too small or even difficult to detect when the grounding resistance is too large, and too large when the grounding resistance is too small so that resistors need to be connected in series to avoid damage to the line. The practicability of the method is greatly reduced due to these problems. An improved idea is to make the short-circuit current last for a short time, so that there is no need to connect current-limiting resistors in series into the circuit, which will not cause damage to the line either. Moreover, if the current-limiting resistors are not connected in series into the circuit, the short-circuit current can be as large as possible and easy to detect, and thus the practicability of the above method is improved (for example, CN110634713A, CN110531822A and CN209822486U are all patent applications for manufacturing short-time current). Even so, the above method is only helpful to indicate a single-phase grounded fault point, but it is still time-consuming to find out the fault point actually, and the harm of a single-phase grounded fault lasting for a long time still exists. How to automatically and quickly cut off the single-phase grounded fault point out of the non-effectively grounded system, minimize the power outage area, shorten the duration of single-phase grounding for reduction of the harm is the technical problem expected to be solved in this field.

### SUMMARY

### Technical Problems

An object of the present disclosure is to provide a method for processing single-phase grounding of a non-effectively grounded system. The method can quickly position an interval of single-phase ground fault point, and automatically, quickly and accurately remove a fault, thereby improving the processing quality of a single-phase grounded fault and the power supply safety.

### Solutions to Problems

### Technical Solutions

In order to achieve the above object, the present disclosure adopts the following technical scheme: a method for processing single-phase grounding of a non-effectively grounded system including a plurality of controlled switches distributed on the non-effectively grounded system, where the plurality of controlled switches can detect current pulses of each phase of a line and automatically cut off the line according to a number of current pulses, and the method includes the following steps: (a) after single-phase grounding occurs, generating a closed loop together with a grounded phase by cyclically connecting and disconnecting a non-fault phase or a neutral point with a ground, and repeatedly generating the current pulses; and (b) detecting the current pulses by using the plurality of controlled switches, and setting the number of current pulses that are triggered to be cut off by the controlled switches in downstream of a power source direction to be less than the number of current pulses triggered to be cut off by the controlled switches in upstream of the power source direction; and after one of the plurality of controlled switches meets a trigger condition and is cut off, stopping grounding of the non-fault phase.

Preferably, in the step (a), the non-fault phase is connected to and disconnected from the ground through an electronic power switch.

Preferably, the electronic power switch is an insulated gate bipolar transistor.

Preferably, before the non-fault phase is cyclically connected to and disconnected from the ground, the non-fault phase is selected by: after the single-phase grounded fault is sensed by a voltage transformer detecting 3U₀ extreme, successively connecting and disconnecting any two phases with the ground through a switch, and selecting a phase with larger current passing through the switch when connected to the ground as the non-fault phase.

Preferably, in the step (a), when a resistance of the closed loop is relatively small, the non-fault phase or the neutral point is connected to the ground at a zero voltage phase angle to obtain a current pulse with relatively small peak value, or when the resistance of the closed loop is relatively large, the non-fault phase or the neutral point is connected to the ground at a 90-degree voltage phase angle to obtain a current pulse with relatively large peak value.

Preferably, a magnitude of the current pulse is monitored, and the electronic power switch is cut off when an instantaneous value of the current pulse reaches a preset value.

Preferably, a grounded point is selected on the non-fault phase on the side, close to a power source, of a first controlled switch closest to the power source to be cyclically connected to and disconnected from the ground, and the first controlled switch is set to automatically cut off the line when the number of current pulses passing through any phase reaches the preset value.

Preferably, a grounded point is selected on the non-fault phase at any position after the first controlled switch closest to the power source on any outgoing line to be cyclically connected to and disconnected from the ground, each controlled switch on the side, far away from the power resource, of the grounded point on the outgoing line is set to automatically cut off the line when the number of current pulses passing through any phase reaches the preset value, the controlled switches on the side, close to the power source, of the grounded point is set to automatically cut off the line only when the number of current pulses passing through any two phases reaches the preset value, and the controlled switches on the other outgoing lines are set to automatically cut off the line when the number of current pulses passing through any phase reaches the preset value.

Preferably, the non-effectively grounded system is a two-phase power supply system or a three-phase power supply system.

Preferably, the controlled switch trips off in time when reaching a trigger condition to be cut off, to avoid a next current pulse from passing through the controlled switch.

### Beneficial Effects of the Disclosure

### Beneficial Effects

The method has the following beneficial effects. After the single-phase ground fault occurs, the non-fault phase or the neutral point can be cyclically connected to and disconnected from the ground so that a grounded short-circuit loop can be formed together with a ground fault phase, thereby generating the short-circuit current pulses. The repeatedly generated current pulse can be detected by the controlled switch on the line. The controlled switch closest to the upper end of a single-phase ground fault point can be cut off according to the number of detected current pulses and the preset number of trigger cut-off pulses, so that the single-phase ground fault is automatically isolated. By using the electronic power switch such as an insulated gate bipolar transistor, more immediate on-off control can be carried out on the grounding of the non-fault phase. Therefore, the current pulse with short current time, as-large-as-possible current and more obvious characteristics can be manufactured, which can be accurately detected by the controlled switch more easily, and the magnitude of the current pulse can be immediately detected by a current transformer connected in series with the electronic power switch. When the instantaneous value of the current pulse exceeds a threshold, the line can be cut off immediately, so that the current pulse is prevented from triggering the overcurrent protection of each section of the line to cause large-area power outage.

### BRIEF DESCRIPTION OF THE DRAWINGS

### Description of the Drawings

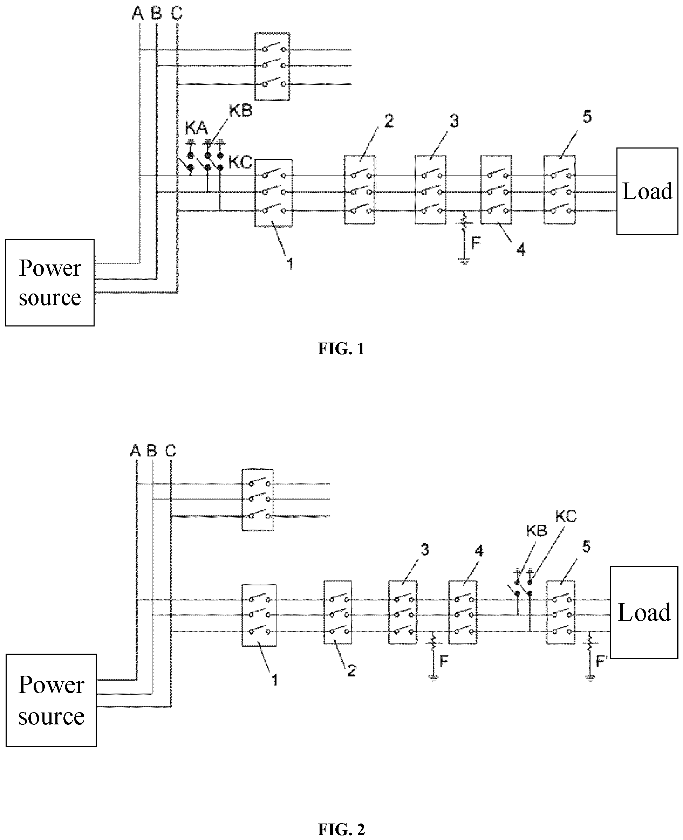

FIG. 1 is a wiring schematic diagram according to an embodiment of the method in the present disclosure; and FIG. 2 is a wiring schematic diagram according to another embodiment of the method in the present disclosure.

### DETAILED DESCRIPTION OF THE EMBODIMENTS

### Embodiments of the present Disclosure

With reference to the accompanying drawings, the present disclosure is further explained by specific embodiments. The three-phase electric power system is a common non-effectively grounded system. A plurality of outgoing lines are arranged on the bus of the three-phase electric power system. Each outgoing line is provided with a plurality of controlled switches. The controlled switches can detect the current pulse on each phase of the line, and can be configured to cut off the three-phase line when the number of current pulses passing through any phase reaches a preset value, or can be configured to cut off the three-phase line when the number of current pulses passing through any two phases reaches the preset value. In one specific embodiment with respect to the controlled switches, the controlled switch includes a control unit, a current detecting unit and an execution unit. The current detecting unit can respectively detect the current of each phase of the three-phase line. The control unit compares the number of current pulses detected by the current detecting unit with the preset value, and can be configured to send a signal to the execution unit for cutting off the three-phase line when the number of current pulses passing through any phase or the number of current pulses passing through any two phases reaches the preset value. For the preset value of the number of current pulses for the trigger of cutting-off, the preset value of the controlled switch in the downstream of a power source direction is smaller than the preset value of the controlled switch in the upstream of the power source direction. The controlled switch in the upstream of the power source direction is relatively closer to the power source, and the controlled switch in the downstream of the power source direction is relatively farther away from the power source, that is, electric energy is generated from the power source and transmitted from the upstream to the downstream. In other words, according to the upstream and downstream of the power source direction, the farther the controlled switch away from the power source, the smaller the preset value of current pulses for the trigger of cutting-off, and the easier the controlled switch is to reach a trigger condition for cutting-off.

As shown in FIG. 1, in a specific embodiment, a grounded point is selected before the first controlled switch 1 closest to the power source in three phases A, B and C (or at least two of the three phases A, B and C), and the lines A, B and C are respectively connected to the ground through the controlled switches KA, KB and KC. At this time, each controlled switch is configured to cut off the three-phase line when detecting that the number of current pulses passing through any phase reaches the preset value. Voltage transformers installed at the positions of KA, KB and KC are used for collecting the voltage of each phase (not shown in the drawings, and referring to the utility model patent CN202815149U). Single-phase grounding is found through 3U₀ extreme sensing (for example, phase C is single-phase grounded at point F). Then, a non-fault phase (such as phase A) is cyclically connected to and disconnected from the ground before the first controlled switch 1, thus forming a grounded short-circuit loop among the power source and the non-fault phase A before the switch KA, the fault phase C before point F and the ground, and the short-circuit current pulse can be repeatedly generated. The short-circuit current pulse only flows through the controlled switches before the single-phase ground fault point F (i.e. the controlled switch 3, the controlled switch 2 and the controlled switch 1) on the fault phase line, but does not pass through the controlled switches after the single-phase ground fault point F (i.e. the controlled switch 4 and the controlled switch 5). In this way, with the continuous operations of cyclical connection and disconnection with the ground, when the number of short-circuit current pulses reaches the preset value of the closest controlled switch 3 before the single-phase ground fault point, the switch can be automatically cut off, thus automatically troubleshooting the single-phase ground fault. Although the number of current pulses for the trigger of cutting-off through the controlled switches 4 and 5 after the single-phase ground fault point F is small, there is no action for cutting-off because the controlled switches 4 and 5 are not connected to the grounded short-circuit loop. However, the controlled switch 2 and the controlled switch 1 are connected to the grounded short-circuit loop, but the number of current pulses for the trigger of cutting-off through the controlled switches 1 and 2 is larger than that for the trigger of cutting-off through the controlled switch 3, and the trigger condition is not achieved, so the switches are not cut off. Thus, it is ensured that the closest controlled switch before the single-phase ground fault point F is cut off, thereby automatically troubleshooting the fault, and minimizing the power outage area. The method is also applicable to two-phase systems or systems with three or more phases.

FIG. 2 illustrates another specific embodiment. Switches are set in any two phases of the three-phase system. For example, the grounded point of the two switches KB and KC is preset after the first controlled switch closest to the power source on any outgoing line, such as between the controlled switch 4 and the controlled switch 5, each controlled switch before the grounded point (i.e. close to the power source side) is set to cut off the three-phase line only when the number of current pulses passing through any two phases reaches the preset value, the controlled switches after the grounded point (i.e. far away from the power source side) is set to cut off the three-phase line when the number of current pulses passing through any phase reaches the preset value, and the controlled switches on the other outgoing lines are set to automatically cut off the line when the number of current pulses passing through any phase reaches the preset value. a, Assumed that phase-C single-phase grounding occurs at point F, the switch KB of the non-fault phase B is cyclically connected to and disconnected from the ground to repeatedly generate current pulses in the grounded short-circuit loop, the controlled switch 5 is not connected to the short-circuit loop, and thus there is no action, as the number of current pulses is increased to reach the trigger number of the controlled switch 3, the controlled switch 3 is cut off to eliminate the ground fault (although the number of current pulses of the controlled switch 4 has been reached earlier, the controlled switch 4 requires the two phases to simultaneously reach the number of current pulses before the grounded points of the three switches KA, KB and KC; however, in fact, the current pulses only pass through the non-fault phase B, and there is no current pulse after the single-phase ground fault point F in the fault phase C; and therefore, the controlled switch 4 is not cut off). b, Assumed that single-phase grounding occurs at point F', the controlled switch 5 can be cut off when it is detected that the number of current pulses passing through one phase reaches the preset value, thereby eliminating the fault.

In the above embodiments, a closed loop can also be formed in such a way that the neutral point is circularly connected to and disconnected from the ground without grounding the non-fault phase.

In the above embodiments, the time interval between two adjacent current pulses needs to be larger than the tripping-off time interval of the controlled switch, which can ensure that the controlled switch is cut off when it reaches the cut-off condition before the next current pulse is transmitted, thereby avoiding the transmission of a plurality of current pulses when the controlled switch does not trip off, which can cause one or more controlled switches before the controlled switch that should trip off to trip off unexpectedly and thus cause unreasonable large-area power outage.

In a specific embodiment, the cyclical connection and disconnection with the ground can be achieved for a short period by using an electronic power switch, such as an insulated gate bipolar transistor. At present, the insulated gate bipolar transistor can withstand high-power connection and disconnection, and has microsecond response, which can generate several short-circuit current pulses with the duration of several milliseconds.

It can be determined whether the ground fault has been eliminated by detecting the voltage signal through the voltage transformer (PT). The electronic power switch can also be connected to and disconnected from the ground once again so as to transmit more additional pulses. At this time, the electronic power switch should be used in conjunction with the current transformer (CT). When a controlled switch is cut off after a certain pulse, another pulse is transmitted. If the current transformer of the electronic power switch cannot detect the short-circuit current, it indicates that a certain one of the controlled switches has tripped off and the fault is eliminated. At this time, non-fault phase grounding can be stopped.

As stated above, it can be detected whether the single-phase ground fault has occurred and determined that there is a non-fault phase by the PT to realize the non-fault phase closing. If it can be determined that single-phase grounding occurs, while it is impossible to accurately determine which two phases are non-fault phases, the non-fault phase can be determined by the following method: any two phases are connected to and disconnected from the ground successively through the electronic power switch to obtain two current pulses (one of which may have a small current), and then the phase with a large current pulse when grounding is selected as the non-fault phase to start the operation of cyclical connection and disconnection with the ground. If the current in one operation is very small, which indicates that the phase is a single-phase ground fault phase, a phase in another operation must be a non-fault phase with a relatively large current. If the phases in both operations are non-fault phases, the phase with the relatively large current can be definitely selected as a non-fault phase.

Due to random occurrence of the single-phase ground fault point, resistance in the grounded short-circuit loop will randomly appear. When the resistance is small, the short-circuit current pulses are large, which may even cause damage to power source equipment and trigger overcurrent protection of the first and second sections of a circuit breaker at the outlet of the faulted line in the three-phase system, resulting in large-scale power outage. In order to avoid this possibility, a current detection device can be set to detect the instantaneous value of the current pulse by using the immediate on-off performance of the electronic power switch. The circuit can be cut off in time when the instantaneous value of the current pulse is too large and exceeds the preset value, thus avoiding the trigger of overcurrent protection. Current limiting resistors can also be connected in series. In addition, the grounding resistance can be determined by using PT to detect 3U₀. When the grounding resistance is small, the electronic power switch can be set to be turned on when the voltage phase angle is zero, which will not generate excitation current and avoid the increase of the short-circuit current, thereby resulting in a relatively small peak value of the current pulse. Alternatively, the series connection manner of the resistors can be adopted. When the grounding resistance is large, the electronic power switch can be turned on when the voltage phase angle is 90° , which will generate excitation current and increase the peak value of short-circuit current, thereby facilitating the detection. The short-circuit current and resistance of the grounded short-circuit loop can be analyzed and determined according to the specific detection environment, which is mastered by those skilled in the art. When the resistance of the short-circuit loop is so large that the short-circuit current is too small to be easily detected, the switch should be switched on near the 90-degree voltage phase angle to increase the current and improve the detection accuracy. When the resistance of the grounded short-circuit loop is so small that the current is so large to burn out the device possibly, the switch can be cut off in time when the instantaneous value of the current pulse reaches the preset value, or can be switched on when the voltage phase angle is zero to avoid the increase of the current, together with current monitoring.

The above embodiments are merely some explanation of concept and implementations of the present disclosure, and are not intended to limit the concept and implementations of the present disclosure, and technical solutions without substantial transformation are still within the scope of protection under the concept of the disclosure.

### Industrial Practicability

Through the experiment in the three-phase power supply system, the above method is completely feasible.

## Claims

1. A method for processing single-phase grounding of a non-effectively grounded system, wherein
a plurality of controlled switches are distributed on the non-effectively grounded system, the plurality of controlled switches detect current pulses of each phase of a line and automatically cut off the line according to a number of current pulses, and the method comprises:
(a) after single-phase grounding occurs, generating a closed loop together with a grounded phase by cyclically connecting and disconnecting a non-fault phase or a neutral point with a ground; and repeatedly generating the current pulses; and
(b) detecting the current pulses by using the plurality of controlled switches, and setting the number of current pulses that are triggered to be cut off by the controlled switches in downstream of a power source direction to be less than the number of current pulses triggered to be cut off by the controlled switches in upstream of the power source direction; and after one of the plurality of controlled switches meets a trigger condition and is cut off, stopping grounding of the non-fault phase.

2. The method for processing single-phase grounding of the non-effectively grounded system according to claim 1, wherein in the step (a), the non-fault phase is connected to and disconnected from the ground through an electronic power switch.

3. The method for processing single-phase grounding of the non-effectively grounded system according to claim 2, wherein the electronic power switch is an insulated gate bipolar transistor.

4. The method for processing single-phase grounding of the non-effectively grounded system according to claim 1, wherein before the non-fault phase is cyclically connected to and disconnected from the ground, the non-fault phase is selected by: after the single-phase grounded fault is sensed by a voltage transformer detecting 3U₀ extreme, successively connecting and disconnecting any two phases with the ground through a switch, and selecting a phase with larger current passing through the switch when connected to the ground as the non-fault phase.

5. The method for processing single-phase grounding of the non-effectively grounded system according to claim 1, wherein in the step (a), when a resistance of the closed loop is relatively small, the non-fault phase or the neutral point is connected to the ground at a zero voltage phase angle to obtain a current pulse with relatively small peak value, or when the resistance of the closed loop is relatively large, the non-fault phase or the neutral point is connected to the ground at a 90-degree voltage phase angle to obtain a current pulse with relatively large peak value.

6. The method for processing single-phase grounding of the non-effectively grounded system according to claim 2, wherein a magnitude of the current pulse is monitored, and the electronic power switch is cut off when an instantaneous value of the current pulse reaches a preset value.

7. The method for processing single-phase grounding of the non-effectively grounded system according to any one of claims 1 to 6, wherein a grounded point is selected on the non-fault phase on the side, close to a power source, of a first controlled switch closest to the power source to be cyclically connected to and disconnected from the ground, and the first controlled switch is set to automatically cut off the line when the number of current pulses passing through any phase reaches the preset value.

8. The method for processing single-phase grounding of the non-effectively grounded system according to any one of claims 1 to 6, wherein a grounded point is selected on the non-fault phase at any position after the first controlled switch closest to the power source on any outgoing line to be cyclically connected to and disconnected from the ground, each controlled switch on the side, far away from the power resource, of the grounded point on the outgoing line is set to automatically cut off the line when the number of current pulses passing through any phase reaches the preset value, the controlled switches on the side, close to the power source, of the grounded point is set to automatically cut off the line only when the number of current pulses passing through any two phases reaches the preset value, and the controlled switches on the other outgoing lines are set to automatically cut off the line when the number of current pulses passing through any phase reaches the preset value.

9. The method for processing single-phase grounding of the non-effectively grounded system according to claim 7, wherein the non-effectively grounded system is a two-phase power supply system or a three-phase power supply system.

10. The method for processing single-phase grounding of the non-effectively grounded system according to claim 1, wherein the controlled switch trips off in time when reaching a trigger condition to be cut off, to avoid a next current pulse from passing through the controlled switch.
